# EUROPÄISCHE PATENTANMELDUNG

(11) **EP 4 728 940 A1**
(43) Veröffentlichungstag der Anmeldung: **22.04.2026**
(21) Anmeldenummer: 25207424.0
(22) Anmeldetag: 08.10.2025
(51) Int. Cl.: A47J 36/00, A47J 36/32

(54) **KOCHGESCHIRR UND VERFAHREN ZUM BETREIBEN**

(30) Priorität: 16.10.2024 DE 102024130002
(71) Anmelder: Miele & Cie. KG, 33332 Gütersloh (DE)
(72) Erfinder: Hölscher, Britta, 30167 Hannover (DE); Müller, Christoph, 32289 Rödinghausen (DE)

(57) **Zusammenfassung**

Kochgeschirr (1) umfassend einen Kochgeschirrgrundkörper (2), ein Anbauteil (3) und eine Elektronikeinrichtung (4) mit einem Energiespeicher (5), wobei der Kochgeschirrgrundkörper (2) einen Boden (6) und eine Wandung (7) umfasst, welche zusammen ein Aufnahmevolumen (8) begrenzen. Das Anbauteil (3) ist an der Außenseite (9) der Wandung (7) angeordnet ist und die Elektronikeinrichtung (4) ist zwischen einer Vorderseite (10) des Anbauteils (3) und der Wandung (7) angeordnet. Dabei ist zwischen einer Rückseite (11) des Anbauteils (3) und der Außenseite (9) der Wandung (7) ein von Luft durchströmbarer Spalt (12) vorgesehen. Bei dem Verfahren zum Betreiben eines solchen Kochgeschirrs (1) wird der Spalt (12) zur Kühlung von Luft durchströmt.

## Beschreibung

Die vorliegende Erfindung betrifft ein Kochgeschirr umfassend wenigstens einen Kochgeschirrgrundkörper, wenigstens ein Anbauteil und wenigstens eine Elektronikeinrichtung mit wenigstens einem Energiespeicher. Der der Kochgeschirrgrundkörper umfasst wenigstens einen Boden und wenigstens eine Wandung, welche wenigstens ein Aufnahmevolumen begrenzen. Das Anbauteil ist an der Außenseite der Wandung angeordnet, wobei die Elektronikeinrichtung wenigstens abschnittsweise zwischen einer Vorderseite des Anbauteils und der Wandung angeordnet ist.

Modernes Kochgeschirr kann je nach Ausstattung einen Benutzer bei der Zubereitung von Speisen sehr gut unterstützen oder sogar selbstständig Kochprozesse durchführen und/oder wenigstens zeitweise steuern.

Dazu ist unter anderem auch Kochgeschirr bekannt geworden, bei welchem die notwendige Elektronik wie zum Beispiel eine Kommunikationseinrichtung, eine Anzeige und/oder weitere Komponenten in einem Anbauteil an der Außenseite der Wandung des Kochgeschirrs angebracht ist. Ein solches Anbauteil wird unter anderem auch Bedienpult genannt. Alternativ kann die Elektronik auch in einem Griff untergebracht werden, was die Druckschrift DE 20 2014 005 495 U1 offenbart. Aus der Druckschrift WO 2016 042 123 A1 ist bekannt, dass der Kochgeschirrgrundkörper in seiner Wandung einen Hohlraum aufweist, in welchem die Elektronik aufgenommen ist.

Bei der Verwendung eines Anbauteils an der Wandung des Kochgeschirrs kann die Wärmeübertragung auf die Elektronik problematisch sein, insbesondere wenn eine Batterie als Energiequelle verbaut ist.

Eine Batterie wird in der Regel so ausgelegt, dass sie in der vorbestimmten Nutzungszeit des Kochgeschirrs nicht oder wenn nur sehr selten getauscht werden muss. Durch die beim Kochen entstehende Wärme bzw. Hitze kann eine Batterie jedoch durch die thermische Übertragung vorzeitig altern, was ungünstig ist. Dabei können Temperaturen von über 80 °C bereits schädlich sein.

Es ist daher die Aufgabe der vorliegenden Erfindung, ein sogenanntes Smartgeschirr bzw. ein Kochgeschirr mit einer Elektronikeinrichtung zur Verfügung zu stellen, bei welchem ein Energiespeicher länger hält.

Diese Aufgabe wird gelöst durch ein Kochgeschirr mit den Merkmalen des Anspruchs 1 und durch ein Verfahren zum Betreiben eines Kochgeschirrs mit den Merkmalen des Anspruchs 15. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Kochgeschirr umfasst wenigstens einen Kochgeschirrgrundkörper, wenigstens ein Anbauteil und wenigstens eine Elektronikeinrichtung mit wenigstens einem Energiespeicher. Dabei umfasst der Kochgeschirrgrundkörper wenigstens einen Boden und wenigstens eine Wandung, wobei durch den Boden und die Wandung wenigstens ein Aufnahmevolumen begrenzt wird. Das Anbauteil ist in der Außenseite der Wandung des Kochgeschirrgrundkörpers angeordnet, wobei die Elektronikeinrichtung wenigstens abschnittsweise zwischen einer Vorderseite des Anbauteils und der Wandung angeordnet ist. Dabei ist zwischen wenigstens einer Rückseite des Anbauteils und der Außenseite der Wandung wenigstens abschnittsweise wenigstens ein Spalt vorgesehen.

Durch den Spalt, welcher offen zur Umgebung in der üblichen Verwendung mit Ungebungsluft gefüllt ist, ist eine thermische Entkopplung von Anbauteil und Kochgeschirrgrundkörper erreicht, wodurch die Elektronikeinrichtung vor übermäßiger Erwärmung bei Kochprozessen geschützt ist.

Das Anbauteil stellt insbesondere ein sogenanntes Bedienpult für ein sogenanntes Smartgeschirr zur Verfügung, wobei das Anbauteil selbst insbesondere das (äußere) Gehäuse der Elektronikeinrichtung darstellt.

Dass wenigstens ein wenigstens ein wenigstens zeitweise von Luft durchströmbarer Spalt zwischen der Rückseite des Anbauteils und der Außenseite der Wandung vorgesehen ist, heißt insbesondere, dass das Anbauteil wenigstens abschnittsweise von der Wandung beanstandet an dieser aufgenommen ist, sodass ein Spalt bzw. ein Freiraum zwischen dem Anbauteil und dem Kochgeschirrgrundkörper verbleibt, durch welchen insbesondere zur Kühlung des Anbauteils bzw. der Elektronikeinrichtung und insbesondere des Energiespeichers Luft strömen kann.

Der Spalt erstreckt sich insbesondere ausgehend von unten bzw. vom Boden des Kochgeschirrgrundkörpers nach oben, sodass Luft von unten nach oben durch den Spalt strömen kann. Es entsteht so je nach Ausgestaltung eine Art Kamineffekt, welcher die Kühlung begünstigt.

Der Spalt ist so bemessen, dass bei einer Reinigung des Kochgeschirrs, beispielsweise in einer Spülmaschine, Wasser den Spalt durchströmen kann, wodurch eine Reinigung des Spalts ermöglicht wird.

Die Elektronikeinrichtung umfasst vorzugsweise weitere im Stand der Technik bekannte Komponenten wie z. B. eine Kommunikationseinrichtung und/oder Sensoren, wie z. B. einen Temperatursensor.

Die Elektronikeinrichtung ist, vorzugsweise vollständig, in dem Anbauteil aufgenommen.

Das erfindungsgemäße Kochgeschirr bietet viele Vorteile. Die Verwendung von sogenanntem Smartgeschirr bietet für einen Benutzer viele Vorteile. Ein Nachteil bei Smartgeschirr ist jedoch, dass eine thermische Problematik auftreten kann, wenn mit dem Smartgeschirr bzw. mit einem Kochgeschirr mit einer Elektronikeinrichtung gekocht wird. So kann es dazu kommen, dass das Anbauteil bzw. die Elektronikeinrichtung und insbesondere der Energiespeicher eine zu hohe Hitzeübertragung erfährt, wodurch die Lebenszeit des Energiespeichers reduziert werden kann.

Da grundsätzlich wartungsarmes oder sogar wartungsfreies Kochgeschirr bevorzugt ist, ist es in der Regel unerwünscht, dass der Energiespeicher grundsätzlich oder zu oft gewechselt werden muss. Daher muss gewährleistet sein, dass eine zu starke Erwärmung des Anbauteils und insbesondere der Elektronikeinrichtung und des Energiespeichers vermieden wird. Dabei soll eine Temperatur von maximal 80 °C an dem Anbauteil bzw. an der Elektronikeinrichtung bzw. an dem Energiespeicher vorliegen, um die Lebenszeit des Energiespeichers nicht unnötig zu verkürzen.

Bei dem erfindungsgemäßen Kochgeschirr wird durch die beabstandete Anordnung des Anbauteils mit einem Spalt zum Kochgeschirrgrundkörper erreicht, dass die Temperatur bzw. Temperaturübertragung auf unter 80 °C gehalten werden kann, je nach Ausgestaltung sogar unter 70 °C oder sogar unter 60 °C.

So wird erreicht, dass der Energiespeicher eine möglichst lange Lebenszeit erreichen kann und somit durch einen Benutzer in der Regel nicht oder nicht außerplanmäßig oft gewechselt werden muss.

Bevorzugt ist der Spalt zwischen der Rückseite des Anbauteils und der Außenseite der Wandung zwischen 1 mm und 20 mm stark, vorzugsweise zwischen 2 mm und 15 mm insbesondere zwischen 5 mm und 10 mm. Ziehen sich diese Werte auf die äußeren sichtbaren Anschlussstellen von Anbauteil zu Kochgeschirrgrundkörper bzw. Wandung. Hierdurch wird erreicht, dass insbesondere im oberen und unteren Bereich des Anbauteils ein ausreichend großer Spalt zur Verfügung gestellt, um eine ausreichende Menge an Luft zwischen Anbauteil und Kochgeschirrgrundkörper hindurchgeführt werden kann. Hinter dem Anbauteil in Richtung der Wandung des Kochgeschirrgrundkörpers kann auch ein größerer durchströmbarer Raum verbleiben, in welchem auch weiter vorzugsweise auf weitere Komponenten angeordnet sein können.

Besonders bevorzugt ist zwischen wenigstens einer Rückseite des Anbauteils und der Außenseite der Wandung wenigstens eine von der Elektronikeinrichtung umfasste Sensoreinrichtung mit wenigstens einem Vorspannelement federnd gehalten. Was insbesondere bevorzugt, dass das Vorspannelement die Sensoreinrichtung gegen die Außenseite gedrückt. So wird die Sensoreinrichtung durch den Spalt geführt bzw. in dem Spalt gehalten. Dabei Sensoreinrichtung insbesondere an dem Vorspannelement vorinstalliert, sodass die Sensoreinrichtung bei der Installation des Anbauteils einen Kochgeschirrgrundkörper automatisch federnd gegen die Außenseite der Wandung gedrückt wird.

Vorzugsweise ist mindestens ein Tragelement zur Aufnahme des Anbauteils an der Außenseite der Wandung vorgesehen. Wird das Anbauteil insbesondere an das Tragelement geschraubt, geknipst, geklebt, ein Gehalt und/oder anders mit dem Tragelement verbunden. Vorzugsweise sind Abstandelemente an dem Tragelement zur Erzeugung des Spalts vorgesehen und/oder das Tragelement wird bereits einem bestimmten Abstand zur Wandung angebracht, wozu auch Abstandelemente vorgesehen sein können.

Bevorzugt ist wenigstens ein Befestigungselement für das Tragelement an der Außenseite der Wandung angeordnet, wobei das Befestigungselement insbesondere mit der Außenseite der Wandung verschweißt, verklebt, einteilig gefertigt und/oder anders damit verbunden ist.

Dabei sind insbesondere wenigstens zwei Befestigungselemente pro Tragelement vorgesehen. Vorzugsweise ist eine bolzenartige Ausgestaltung der Befestigungselemente vorgesehen. Je nach Ausgestaltung kann das Tragelement dann beispielsweise in das Befestigungselement bzw. in die Befestigungselemente eingehängt werden. So kann das Tragelement vorzugsweise je nach Ausgestaltung vorfixiert werden, wobei es dann z. B. final erst bei der Befestigung des Anbauteils fixiert wird. Das Tragelement kann zum Beispiel bevorzugt durch das Anschrauben des Anbauteils gegen die Außenseite der Wandung verspannt werden.

Besonders bevorzugt ist wenigstens ein Isolierelement an dem Befestigungselement und/oder in Wirkverbindung zu dem Befestigungselement vorgesehen. So kann insbesondere vorgesehen sein, dass das Tragelement bzw. das Anbauteil durch ein Isolierelement thermischen entkoppelt auf dem Befestigungselement an dem Befestigungselement aufgenommen ist. So kann insbesondere wenigstens ein Silikonteil als Isolierelement zur thermischen Entkopplung vorgesehen sein.

Bevorzugt verläuft der Spalt über eine wesentliche Breite der Rückseite des Anbauteils, insbesondere über die gesamte Breite. Bei einer solchen Ausgestaltung ist vorgesehen, dass das gesamte Bedienpult bzw. das gesamte Anbauteil beanstandet von dem Kochgeschirrgrundkörper vorliegt.

Vorzugsweise ist wenigstes eine strömungsoptimierte Kontur wenigstens an der Rückseite des Anbauteils vorgesehen. Dabei sind insbesondere strömungsoptimierte Radien vorgesehen, sodass Luft besonders vorteilhaft durch den Spalt geführt werden kann.

Besonders bevorzugt ist der Spalt an wenigstens einer Stelle mittels wenigstens eines Verschlusselements verschließbar. Dabei ist bevorzugt, dass wenigstens der Spalt an der oberen Seite des Anbauteils verschließbar ist, sodass die Durchströmung mit Luft wenigstens temporär unterbunden werden kann.

Vorzugsweise umfasst das Verschlusselement dazu wenigstens ein Bimetallelement und/oder wenigstens ein bewegliches Verschlussteil. So kann insbesondere wenigstens ein Bimetallstreifen vorgesehen sein, welcher beim Erreichen einer bestimmten Temperatur den Spalt zur Kühlung freigibt oder ein Gaskolben mit einer Platte oder dergleichen als Verschlusselement, welches automatisch oder auch manuell den Spalt freigeben oder diesen verschließend kann.

Bevorzugt ist wenigstens eine Ventilatoreinrichtung an und/oder in dem Spalt angeordnet. Dabei ist die Ventilatoreinrichtung wenigstens abschnittsweise in und/oder an Spalt angeordnet, wobei die Ventilatoreinrichtung vollständig oder auch nur abschnittsweise in dem Spalt und/oder in dem Anbauteil vorliegen kann.

Vorzugsweise sie Ventilatoreinrichtung mittels des Energiespeichers betreibbar bzw. mit Energie versorgbar.

In zweckmäßigen Ausgestaltungen ist wenigstens ein passives Strömungselement an und/in dem Spalt angeordnet. Dabei können derartige Strömungselemente beispielsweise durch einen Propeller bzw. Drehflügel bzw. Rotor zur Verfügung gestellt werden, welcher durch Konvektion bzw. einen Kamineffekt im Spalt in Rotation versetzt wird und so die Bewegung des Luftstroms in dem Spalt noch verstärken kann.

Das erfindungsgemäße Verfahren eignet sich zum Betreiben eines Kochgeschirrs, wie es zuvor beschrieben wurde. Dabei wird der Spalt wenigstens beim Erreichen einer vorbestimmten Temperatur wenigstens zeitweise zur Kühlung des Anbauteils bzw. der Elektronikeinrichtung bzw. des Energiespeichers von Luft durchströmt.

Auch das Verfahren bietet die Vorteile, wie sie zuvor schon zu dem erfindungsgemäßen Kochgeschirr ausgeführt wurden.

Bevorzugt wird der Spalt wenigstens abschnittsweise verschlossen bzw. freigegeben. Dabei kann insbesondere der Stimmungsquerschnitt eingestellt bzw. verschlossen bzw. geöffnet werden, um je nach Bedarf eine bestimmte Kühlung zu erreichen bzw. die Kühlleistung einzustellen.

Besonders bevorzugt ist wenigstens eine Ventilatoreinrichtung und/oder wenigstens ein passives Strömungselement in und/oder an dem Spalt angeordnet, wobei durch diese ein Luftstrom durch den Spalt zur Kühlung erzeugt und/oder verstärkt wird. So kann je nach Ausgestaltung eine noch bessere Kühlung des Anbauteils bzw. der Elektronikeinrichtung bzw. des Energiespeichers gewährleistet werden.

Ein Aspekt ist es, dass das Anbauteil als ein Griff des Kochgeschirrs ausgeführt ist.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines Ausführungsbeispiels eines erfindungsgemäßen Kochgeschirrs in einer Explosionsdarstellung;
- Figur 2: eine rein schematische Darstellung eines Ausführungsbeispiels eines erfindungsgemäßen Kochgeschirrs in einer Explosionsdarstellung;
- Figur 3: eine rein schematische Darstellung eines Ausführungsbeispiels eines erfindungsgemäßen Kochgeschirrs in einer Seitenansicht und einer perspektivischen Teilansicht;
- Figur 4: eine rein schematische Darstellung eines Ausführungsbeispiels eines erfindungsgemäßen Kochgeschirrs in einer Seitenansicht und einer perspektivischen Teilansicht;
- Figur 5: eine rein schematische Darstellung eines weiteren Ausführungsbeispiels eines erfindungsgemäßen Kochgeschirrs in einer Draufsicht und einer Schnittansicht von der Seite;
- Figur 6: eine rein schematische Darstellung eines anderen Ausführungsbeispiels eines erfindungsgemäßen Kochgeschirrs in einer Draufsicht und einer Schnittansicht von der Seite;
- Figur 7: eine rein schematische Darstellung eines nächsten Ausführungsbeispiels eines erfindungsgemäßen Kochgeschirrs in einer Draufsicht und einer Schnittansicht von der Seite;
- Figur 8: eine rein schematische Darstellung eines alternativen Ausführungsbeispiels eines erfindungsgemäßen Kochgeschirrs in zwei Schnittansichten von der Seite;
- Figur 9: eine rein schematische Darstellung eines nächsten Ausführungsbeispiels eines erfindungsgemäßen Kochgeschirrs in zwei Schnittansichten von der Seite;
- Figur 10: eine rein schematische Darstellung eines weiteren Ausführungsbeispiels eines erfindungsgemäßen Kochgeschirrs in einer Schnittansicht von der Seite;
- Figur 11: eine rein schematische Darstellung eines anderen Ausführungsbeispiels eines erfindungsgemäßen Kochgeschirrs in einer Schnittansicht von der Seite;
- Figur 12: eine rein schematische Darstellung eines nächsten Ausführungsbeispiels eines erfindungsgemäßen Kochgeschirrs in einer Schnittansicht von der Seite; und
- Figur 13: eine rein schematische Darstellung eines weiteren Ausführungsbeispiels eines erfindungsgemäßen Kochgeschirrs in einer Schnittansicht von der Seite.

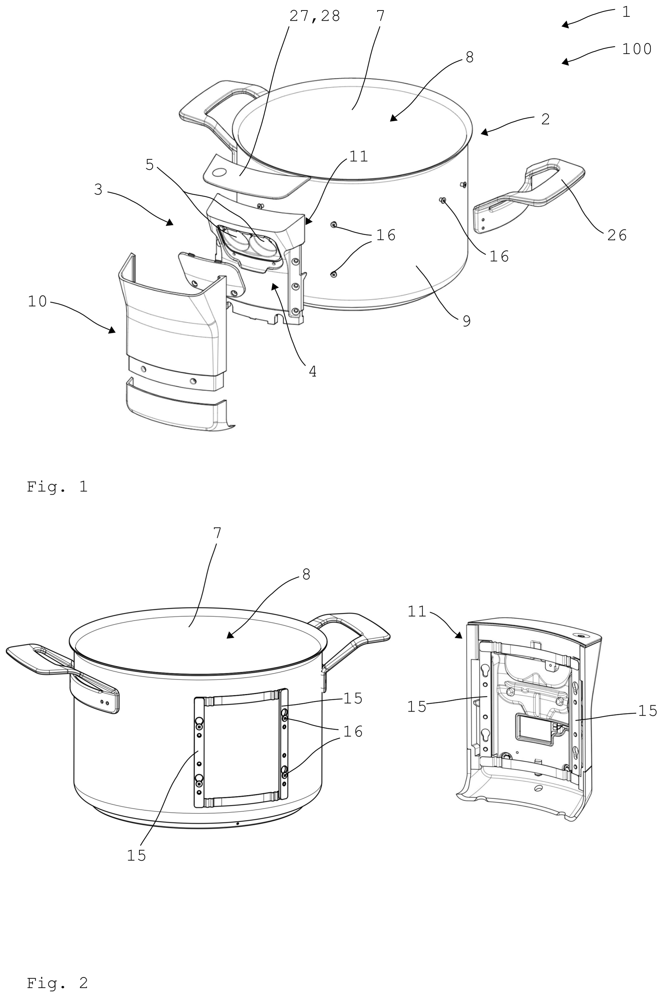

In Figur 1 ist rein schematisch ein erfindungsgemäßes Kochgeschirr 1 dargestellt, welches ein sogenanntes Smartgeschirr 100 bzw. Smartkochgeschirr 100 zur Verfügung stellt. Das erfindungsgemäße Kochgeschirr 1 umfasst dabei einen Kochgeschirrgrundkörper 2, ein Anbauteil 3 und eine Elektronikeinrichtung 4 mit einem Energiespeicher 5.

Der Kochgeschirrgrundkörper 2 umfasst einen Boden 6 und eine Wandung 7, welche zusammen ein Aufnahmevolumen 8 für Lebensmittel bereitstellen bzw. ausbilden.

An der Wandung 7 können Befestigungselemente vorgesehen sein, mit welchen beispielsweise ein Griff 26 bzw. Griffe 26 an dem Kochgeschirrgrundkörper 2 befestigt werden können.

Das Anbauteil 3 dient hier insbesondere als Gehäuse bzw. Abdeckung für die Elektronikeinrichtung 4, welche verschiedene Funktionalitäten für ein Benutzer im Bereich des "smarten" Kochens bereitstellt. Dabei umfasst die Elektronikeinrichtung 4 in dem hier gezeigten Ausführungsbeispiel unter anderem eine nicht näher dargestellte Kommunikationseinrichtung, mittels welcher das Kochgeschirr 1 mit einem Kochfeld bzw. einer Kochfeldeinrichtung kommunizieren kann. Weiterhin umfasst die Elektronikeinrichtung in dem oberen Bereich des Anbauteils 3 eine Bedieneinrichtung 27, in welche hier auch eine Anzeigeeinrichtung 28 integriert ist.

Die Elektronikeinrichtung ist hier zwischen der Vorderseite 10 des Anbauteils 3 und der Außenseite 9 der Wandung 7 des Kochgeschirrgrundkörpers anordnet bzw. aufgenommen.

Zur Befestigung des Anbauteils 3 und somit auch der Elektronikeinrichtung 4 an dem Kochgeschirrgrundkörper 2 sind in dem gezeigten Ausführungsbeispielen bolzenartige Befestigungselemente 16 an der Außenseite 9 in der Wandung 7 befestigt, hier durch ein Anschweißen der Befestigungselemente 16.

In Figur 2 ist das Ausführungsbeispiel gemäß Figur 1 erneut dargestellt, wobei hier dargestellt ist, dass die Elektronikeinrichtung 4 bzw. das Anbauteil 3 über Tragelemente 15 an dem Kochgeschirrgrundkörper 2 bzw. der Wandung 7 aufgenommen sind, welche hier in die Befestigungselemente 16 eingehängt werden.

Die Tragelemente 15 können beispielsweise durch das Anschrauben des Anbauteils 3 gegen die Wandung 7 verspannt werden, sodass eine sichere Aufnahme des Anbauteils 3 an der Wandung 7 gewährleistet ist.

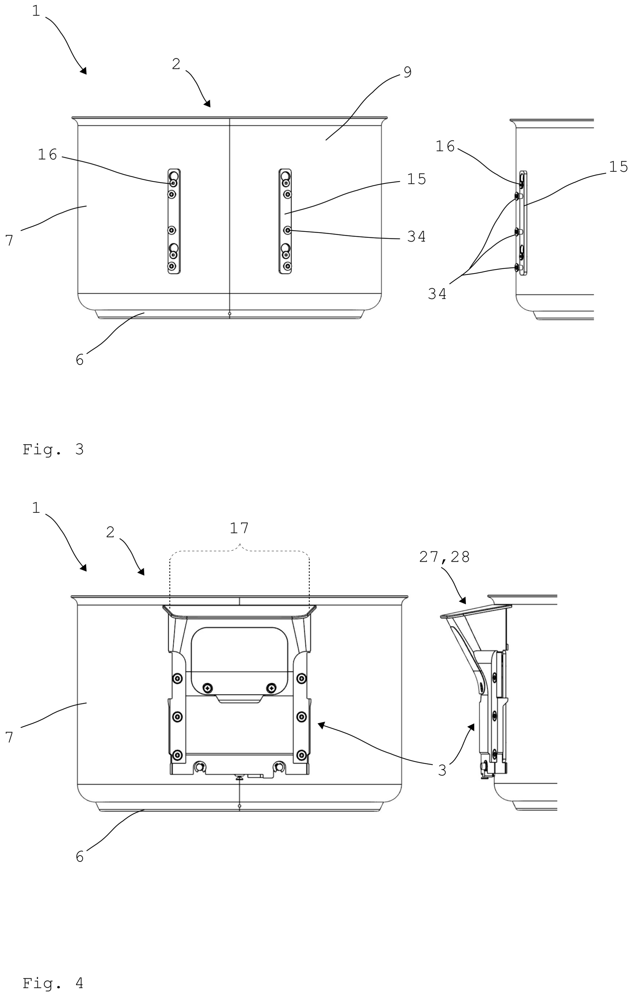

Auch in Figur 3 ist rein schematisch dargestellt, dass Tragelemente 15 in die Befestigungselemente 16 eingehängt werden können bzw. mit diesem befestigt werden können. Dabei wird an diesen Tragelementen 15 das Anbauteil 3 aufgenommen bzw. befestigt.

Weiterhin ist in dem hier gezeigten Ausgangsbeispiel dargestellt, dass an den Tragelementen 15 Abstandselement 34 vorgesehen sein können, welche hier bolzenartig ausgebildet sind. Über diese Abstandselemente 34 kann das Anbauteil 3 mit einem gewissen Abstand bzw. mit einem Spalt 12 zwischen der Außenseite 9 der Wandung 7 und der Rückseite 11 des Anbauteils 3 angeordnet werden. Durch den Spalt 12 wird je nach Ausgestaltung eine ausreichende Kühlung bzw. eine thermische Entkopplung zwischen Wandung 7 und Anbauteil 3 erreicht.

In Figur 4 ist rein schematisch dargestellt, dass das Anbauteil 3 in dem gezeigten Ausführungsbeispiel an die Tragelemente 15 angeschraubt wird, wobei hier jeweils in den Abstandselementen 34 ein entsprechendes Gewinde vorgesehen ist, um das Anbauteil 3 zu befestigen. So wird in dem gezeigten Ausführungsbeispiel erreicht, dass ein Spalt 12 über nahezu die gesamte Breite 17 des Anbauteils 3 zur Verfügung gestellt wird.

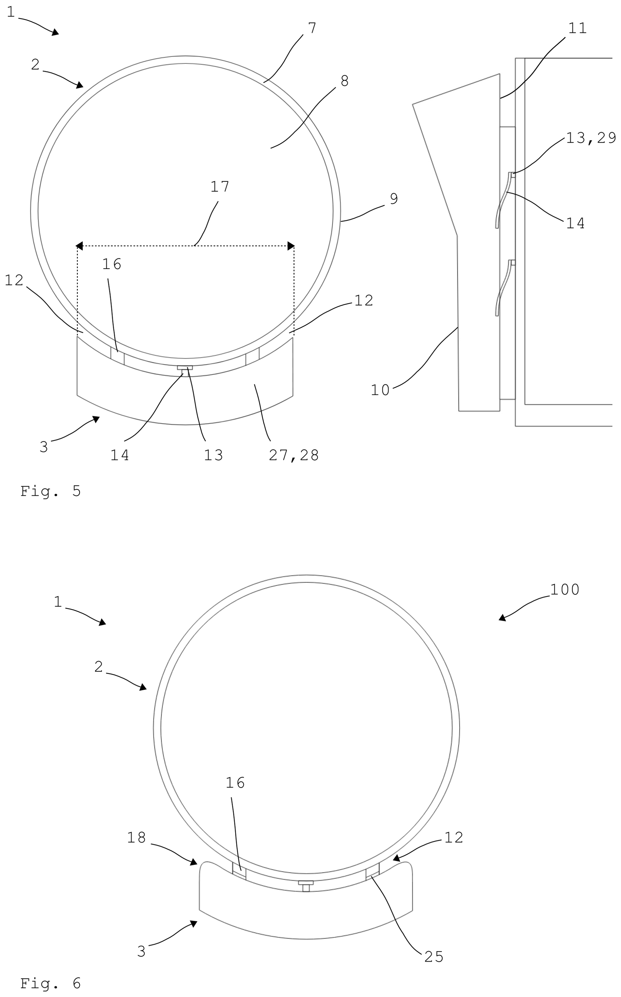

In Figur 5 ist ein weiteres Ausführungsbeispiel eines erfindungsgemäßen Kochgeschirrs 1 in einer Draufsicht dargestellt, welches vom Grundaufbau dem zuvor gezeigten Kochgeschirr 1 entspricht.

Hier ist zu erkennen, dass das Anbauteil 3 beanstandet von der Außenseite 9 der Wandung 7 des Kochgeschirrgrundkörpers 2 angeordnet ist. So entsteht zwischen dem Anbauteil 3 und dem Kochgeschirrgrundkörper ein Spalt 12, welcher von Luft durchströmt werden kann.

Dieser Spalt 12 dient zur Kühlung des Anbauteils 3 bzw. der Elektronikeinrichtung 4 und insbesondere des Energiespeichers 5. Durch den kühlen Luftstrom kann erreicht werden, dass die Hitzeübertragung beim Kochen vom Kochgeschirrgrundkörper 2 auf das Anbauteil 3 bzw. Elektronikeinrichtung 3 und insbesondere den Energiespeicher reduziert und vorzugsweise auf unter 80 °C, insbesondere unter 70 °C und vorzugsweise unter 60 °C zu begrenzen.

In dem gezeigten Ausführungsbeispiel ist dargestellt, dass sich der Spalt 12, welcher sich insbesondere von unten, also vom Boden 6 des Kochgeschirrgrundkörpers 2, nach oben verläuft, im Wesentlichen über die gesamte Breite 17 der Rückseite 11 des Anbauteils 3 erstreckt. So kann eine besonders gute Hinterlüftung des Anbauteils 3 erreicht werden.

Weiterhin ist in Figur 5 dargestellt, dass die Elektronikeinrichtung 4 hier mehrere Sensoreinrichtungen 13 umfasst, welche hier als Temperatursensoren 29 ausgebildet sind. Diese Sensoreinrichtungen 13 werden in dem gezeigten Ausführungsbeispiel mittels jeweils eines Vorspannelements 14 gegen die Außenseite 9 der Wandung 7 des Kochgeschirrgrundkörpers 2 gedrückt, sodass hier Temperaturen in unterschiedlichen Höhen des Kochgeschirrs 1 ermittelt und an eine Kochfeldeinrichtung übermittelt werden können.

In Figur 6 ist eine weitere Ausführungsform eines erfindungsgemäßen Kochgeschirrs 1 in einer Draufsicht dargestellt, welche vom Grundaufbau den zuvor gezeigten Ausführungen entspricht.

Zusätzlich zu den zuvor beschriebenen Eigenschaften ist in Figur 6 dargestellt, dass das Anbauteil 3 und insbesondere die Rückseite 11 des Anbauteils 3 eine strömungsoptimierte Kontur 18 aufweisen kann, welche insbesondere durch strömungsoptimierte Radien in der Gehäuseform bereitgestellt wird. Auch so kann eine besonders geeignete Durchströmung des Spalts 12 zur Kühlung erreicht werden.

Weiterhin ist dargestellt, dass das Anbauteil 3 und insbesondere die Elektronikeinrichtung 4 über wenigstens eine Isoliereinrichtung 25 thermisch entkoppelt an dem Kochgeschirrgrundkörper 2 aufgenommen sein kann. Dazu sind hier Isoliereinrichtungen 25 an den Befestigungselementen 16 vorgesehen, sodass in dem gezeigten Ausführungsbeispiel die Tragelemente 15, welche in Figur 4 nicht zu sehen sind, thermisch entkoppelt in die Befestigungselemente 16 eingehängt werden können.

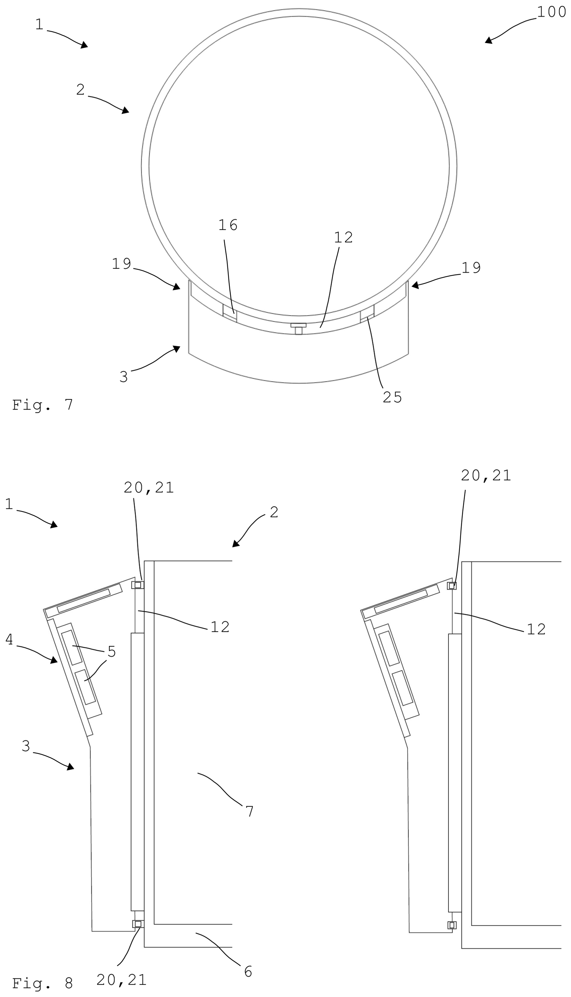

In Figur 7 ist ein nächstes Ausführungsbeispiel eines erfindungsgemäßen Kochgeschirrs 1 in einer Draufsicht dargestellt. Es ist dargestellt, dass der Spalt 12 an den Seiten des Anbauteils 3 geschlossen sein kann, wozu das Gehäuse bzw. das Anbauteil an den Seiten 19 bis an die Außenseite 9 der Wandung 7 geführt ist.

In Figur 8 ist rein schematisch dargestellt, dass bei anderen Ausführungsformen alternativ oder zusätzlich zu den zuvor beschriebenen Merkmalen wenigstens ein Verschlusselement 20 vorgesehen sein kann, welches den Spalt 12 wenigstens zeitweise verschließen kann.

Dabei ist in Figur 8 als Verschlusselement ein Bimetallelement 21 bzw. ein Bimetallstreifen vorgesehen, welcher beim Erreichen einer vorbestimmten Temperatur durch eine Änderung der Lage und/oder der Form den Spalt 12 freigibt. Hier sind im oberen und unteren Abschnitt des Anbauteils 3 Verschlusselement 20 vorgesehen je nach Ausgestaltung kann beispielsweise auch nur im oberen Bereich ein Verschlusselement vorgesehen sein.

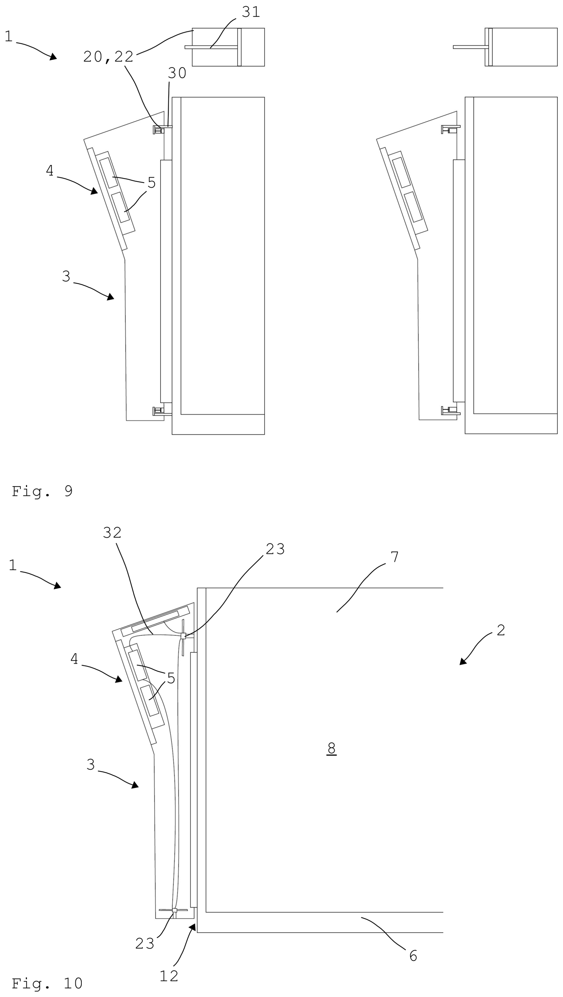

In Figur 9 ist eine alternative Verschlussmöglichkeit mit Verschlusselementen 20 dargestellt. Dabei ist hier der Verschluss des Spalts 12 über ein Verschlussteil 22 vorgesehen, wobei das Verschlussteil 22 hier einen Kolben 31 eine Verschlussplatte 30 umfasst. Auch so kann der Spalt 12 temperaturabhängig und/oder gesteuert oder auch anders geöffnet und geschlossen werden.

In den Figuren 10, 11 und 12 sind verschiedene Ausführungsform eines erfindungsgemäßen Kochgeschirrs dargestellt, welche vom Grundprinzip den zuvor gezeigten Ausführungen entsprechen. Dabei ist dargestellt, dass in dem Spalt 12 bzw. in und/oder an dem Spalt 12 und/oder in dem Anbauteil 3 in Verbindung zu dem Spalt 12 Ventilatoreinrichtungen 13 vorgesehen sein können. Diese Ventilatoreinrichtungen 23 können insbesondere über den Energiespeicher 5 betrieben werden und sind dazu vorzugsweise mit Kabeln bzw. Leitungen 32 mit dem Energiespeicher verbunden.

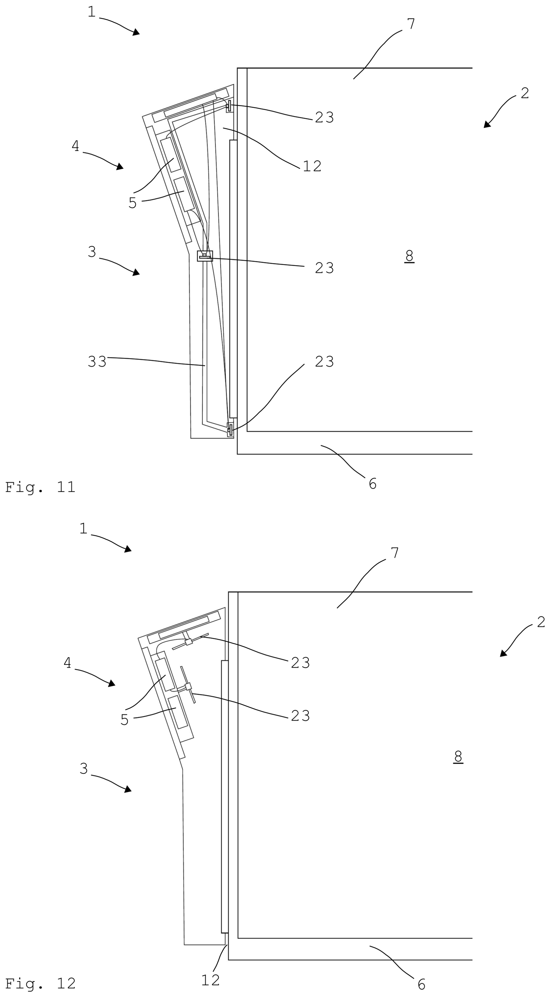

In Figur 11 ist zusätzlich dargestellt, dass ein Strömungskanal 33 vorgesehen sein kann, welcher Luft hier mittels einer Ventilatoreinrichtung 23 direkt an dem Energiespeicher 5 vorbeiführt.

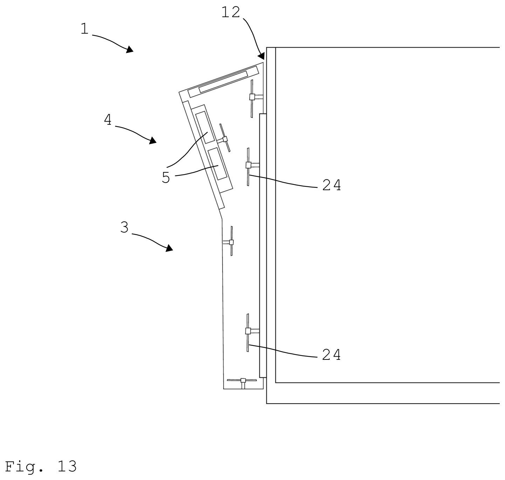

In Figur 13 ist rein schematisch alternative in Verbindung mit einer anderen Ausführung gezeigten Ausführungsform oder auch als eigenständige Ausführung dargestellt, dass passive Strömungselemente 24 vorgesehen sein können, welche den Luftstrom durch den Spalt 12 verstärken können. Dabei sind hier nicht-angetriebene Rotoren bzw. Propeller bzw. vorgesehen, welche durch den über ein Kamineffekt erzeugten Luftstrom verstärken können.

### Bezugszeichenliste

- 1: Kochgeschirr
- 2: Kochgeschirrgrundkörper
- 3: Anbauteil
- 4: Elektronikeinrichtung
- 5: Energiespeicher
- 6: Boden
- 7: Wandung
- 8: Aufnahmevolumen
- 9: Außenseite
- 10: Vorderseite
- 11: Rückseite
- 12: Spalt
- 13: Sensoreinrichtung
- 14: Vorspannelement
- 15: Tragelement
- 16: Befestigungselement
- 17: Breite
- 18: Kontur
- 19: Seite
- 20: Verschlusselement
- 21: Bimetallelement
- 22: Verschlussteil
- 23: Ventilatoreinrichtung
- 24: Strömungselement
- 25: Isoliereinrichtung
- 26: Griff
- 27: Bedieneinrichtung
- 28: Anzeigeeinrichtung
- 29: Temperatursensor
- 30: Verschlussplatte
- 31: Kolben
- 32: Kabel/Leitung
- 33: Strömungskanal
- 34: Abstandselement
- 100: Smartkochgeschirr

## Patentansprüche

1. Kochgeschirr (1) umfassend
wenigstens einen Kochgeschirrgrundkörper (2),
wenigstens ein Anbauteil (3) und
wenigstens eine Elektronikeinrichtung (4) mit wenigstens einem Energiespeicher (5),
wobei der Kochgeschirrgrundkörper (2)
wenigstens einen Boden (6) und
wenigstens eine Wandung (7) umfasst und
wobei durch den Boden (6) und die Wandung (7) wenigstens ein Aufnahmevolumen (8) begrenzt wird,
wobei das Anbauteil (3)
an der Außenseite (9) der Wandung (7) angeordnet ist und
eine der Wandung (7) zugewandte Rückseite (11) aufweist und
eine der Wandung (7) abgewandte Vorderseite (10) aufweist,
wobei die Rückseite (11) zu der der Wandung (7) einen geringeren Abstand hat als die Vorderseite (10), und
wobei die Elektronikeinrichtung (4) wenigstens abschnittsweise zwischen der Vorderseite (10) des Anbauteils (3) und der Wandung (7) des Kochgeschirrgrundkörpers (2) angeordnet ist,
**dadurch gekennzeichnet, dass**
zwischen der Rückseite (11) des Anbauteils (3) und der Außenseite (9) der Wandung (7) wenigstens abschnittsweise wenigstens ein Spalt (12) vorgesehen ist, insbesondere wobei der wenigstens eine Spalt (12) während einer Verwendung des Kochgeschirrs (1) wenigstens zeitweise von Luft durchströmbar ist und/oder während einer Reinigung des Kochgeschirrs (1) wenigstens zeitweise von Wasser durchströmbar ist, und
der Energiespeicher (5) außerhalb des Spalts (12), insbesondere zwischen der Vorderseite (10) und der Rückseite (11) des Anbauteils (3) angeordnet ist.

2. Kochgeschirr (1) nach Anspruch 1, **dadurch gekennzeichnet, dass** der Spalt (12) zwischen Rückseite (11) des Anbauteils (3) und der Außenseite (9) der Wandung (7) zwischen 1 mm und 20 mm stark ist, vorzugsweise zwischen 2 mm und 15 mm und insbesondere zwischen 5 mm und 10 mm.

3. Kochgeschirr (1) nach einem der vorhergehenden Ansprüche, **dadurch gekennzeichnet, dass** die Elektronikeinrichtung (4) wenigstens eine Sensoreinrichtung (13) umfasst, welche zwischen wenigstens einer Rückseite (11) des Anbauteils (3) und der Außenseite (9) der Wandung (7) mit wenigstens einem Vorspannelement (14) federnd gehalten ist.

4. Kochgeschirr (1) nach einem der vorhergehenden Ansprüche, **dadurch gekennzeichnet, dass** wenigstens ein Tragelement (15) zur Aufnahme des Anbauteils (3) an der Außenseite (9) der Wandung (7) vorgesehen ist.

5. Kochgeschirr (1) nach dem vorhergehenden Anspruch, **dadurch gekennzeichnet, dass** wenigstens ein Befestigungselement (16) für das Tragelement (15) an Außenseite (9) der Wandung (7) angeordnet ist, wobei das Befestigungselement (16) insbesondere mit der Außenseite (9) der Wandung (7) verschweißt, verklebt, einteilig gefertigt und/oder anders damit verbunden ist.

6. Kochgeschirr (1) nach einem der vorhergehenden Ansprüche, **dadurch gekennzeichnet, dass** wenigstens ein Isolierelement (25) an dem Befestigungselement (16) vorgesehen ist.

7. Kochgeschirr (1) nach einem der vorhergehenden Ansprüche, **dadurch gekennzeichnet, dass** der Spalt (12) über eine wesentliche Breite (17) der Rückseite (11) des Anbauteils (3) verläuft, insbesondere über die gesamte Breite.

8. Kochgeschirr (1) nach einem der vorhergehenden Ansprüche, **dadurch gekennzeichnet, dass** wenigstens eine strömungsoptimierte Kontur (18) wenigstens an der Rückseite (11) des Anbauteils (3) vorgesehen sind.

9. Kochgeschirr (1) nach einem der vorhergehenden Ansprüche, **dadurch gekennzeichnet, dass** wenigstens eine Seite (19) der Rückseite (11) des Anbauteils (3) bis an die Außenseite (9) der Wandung (7) geführt ist.

10. Kochgeschirr (1) nach einem der vorhergehenden Ansprüche, **dadurch gekennzeichnet, dass** der Spalt (12) an wenigstens einer Stelle mittels wenigstens eines Verschlusselements (20) verschließbar ist.

11. Kochgeschirr (1) nach dem vorhergehenden Anspruch, **dadurch gekennzeichnet, dass** Verschlusselement (20) wenigstens ein Bimetallelement (21) und/oder wenigstens ein bewegliches Verschlussteil (22) umfasst.

12. Kochgeschirr (1) nach einem der vorhergehenden Ansprüche, **dadurch gekennzeichnet, dass** wenigstens eine Ventilatoreinrichtung (23) an und/oder in dem Spalt (12) angeordnet ist.

13. Kochgeschirr (1) nach dem vorhergehenden Anspruch, **dadurch gekennzeichnet, dass** die Ventilatoreinrichtung (23) über Energiespeicher (5) betreibbar ist.

14. Kochgeschirr (1) nach einem der vorhergehenden Ansprüche, **dadurch gekennzeichnet, dass** wenigstens ein passives Strömungselement (24) an und/oder in dem Spalt (12) angeordnet ist.

15. Verfahren zum Betreiben eines Kochgeschirrs nach einem der vorhergehenden Ansprüche, **dadurch gekennzeichnet, dass** der Spalt (12) wenigstens beim Erreichen einer vorbestimmten Temperatur wenigstens zeitweise zur Kühlung von Luft durchströmt wird.

16. Verfahren nach dem vorhergehenden Anspruch, **dadurch gekennzeichnet, dass** der Spalt (12) wenigstens abschnittsweise verschlossen oder freigeben wird.

17. Verfahren nach einem der beiden vorhergehenden Ansprüche, **dadurch gekennzeichnet, dass** wenigstens eine Ventilatoreinrichtung (23) und/oder wenigstens ein passives Strömungselement (24) in und/oder an dem Spalt (12) angeordnet ist und dass durch diese ein Luftstrom durch den Spalt (12) zur Kühlung erzeugt und/oder verstärkt wird.
